# EUROPEAN PATENT SPECIFICATION

(11) **EP 2 720 597 B1**
(45) Date of publication and mention of the grant of the patent: **03.02.2016**
(21) Application number: 12730687.6
(22) Date of filing: 14.06.2012
(51) Int. Cl.: A47L 15/24, B25J 5/00, G06K 9/00, B25J 15/02

(54) **METHOD AND SYSTEM FOR CLEANING OF CROCKERY, USING ELECTRONIC VISION SYSTEM AND MANIPULATOR**
VERFAHREN UND SYSTEM ZUM REINIGEN VON GESCHIRR MITTELS EINES ELEKTRONISCHEN SICHTSYSTEMS UND MANIPULATORS
PROCÉDÉ ET SYSTÈME DE NETTOYAGE DE VAISSELLE, À L'AIDE D'UN SYSTÈME DE VISION ÉLECTRONIQUE ET UN MANIPULATEUR

(30) Priority: 16.06.2011 NL 2006950
(43) Date of publication of application: 23.04.2014
(73) Proprietor: Kampri Support B.V., 8023 DV Zwolle (NL)
(72) Inventor: KAMPHUIS, Willem Ernst Hendrik, NL-8023 DV Zwolle (NL)
(74) Representative: EP&C
(86) International application number: PCT/NL2012/050417
(87) International publication number: WO 2012/173479

(56) References cited:
- EP-A1- 0 495 697
- EP-A2- 1 043 642
- EP-A2- 2 158 833
- WO-A1-2010/122445
- DE-A1- 2 930 006
- DE-A1- 3 730 236
- DE-A1- 19 744 488
- DE-A1-102006 048 236
- US-A- 4 042 122
- US-B1- 6 212 481

## Description

### FIELD OF THE INVENTION

The present invention relates to the field of crockery cleaning, and more specifically to a method and system of cleaning crockery. The present invention in particular relates to a preparatory step in the cleaning of dirty crockery, in which the dirty crockery is manipulated to be positioned in a basket which is to be fed to a washing machine (which may also be referred to as a dish washing machine). The present invention further relates to an electronic vision system for detecting a position of an item of crockery, which electronic vision system may be used in the method of cleaning crockery of the present invention. The present invention further relates to a manipulator for manipulating crockery, which manipulator may be used in the method of cleaning crockery of the present invention, and may be controlled by the electronic vision system of the present invention to position dirty crockery in a basket which is to be fed to a washing machine.

### BACKGROUND OF THE INVENTION

In a professional kitchen environment, where food is prepared in on a large scale for consumption by large groups of people, it is customary to present the food to the people at different stations or counters, where each person can choose different food and drink items, and in quantities and combinations to his or her liking. In this food gathering process, each person uses a tray to place crockery on, like dishes, cups, mugs, saucers, etcetera, on or in which the food and drinks are served. After the meal, the tray with the dirty crockery placed on it in a disorderly manner, is brought to a discharge station where it is placed on a conveyor, such as a belt conveyor, to be conveyed to the kitchen area where the crockery is cleaned for re-use.

Cleaning of crockery takes place by first removing the cutlery from the tray. This may be done by hand or with magnetic means, where the magnetizable material of the cutlery is attracted by one or more magnets, taken away by the one or more magnets, and discharged into a basket of a washing machine to be cleaned.

In a next step, the different items of crockery are removed from the tray and placed in different baskets fit for the purpose, in a predetermined position and orientation. The baskets loaded with crockery are placed in a washing machine for the crockery to be cleaned.

The cleaning of crockery involves a great deal of human labor which is hard and expensive work.

EP 2158833 discloses a crockery cleaning device, comprising a conveyor device for conveying the crockery through a cleaning zone. A robot is configured to handle crockery items and transfer them to the conveyor device.

### SUMMARY OF THE INVENTION

It would be desirable to provide means for reducing human labor in the cleaning of crockery.

To better address this concern, in a first aspect of the invention a method for cleaning dirty crockery according to claim 1 is provided.

The handling of dirty crockery, which may be supplied in an unordered way on a tray, one item of crockery positioned next to or stacked onto another item of crockery, is done by a manipulator in the method of the present invention. Since each item of crockery may have a position and an orientation which are not predefined, the manipulator is controlled on the basis of position and orientation data gathered by an electronic vision system. In this way, crockery can be unloaded automatically, without human intervention, and placed in a basket which is designed for accommodating particular items of crockery arranged, positioned and oriented in a predefined way. Thereafter, the basket or baskets containing specific items of crockery can be placed in a washing machine by hand or automatically, to be cleaned. Overall, human labor is reduced.

The rotatably driven clamping members provide for a simple and effective handling of an item of crockery. A dish or saucer may be clamped by the fingers and rotated into a desired orientation (usually rotated over about 90 degrees from a position as found) for placing it in a basket. A cup, mug, glass or bowl may be clamped by the fingers and rotated into a desired orientation (usually rotated upside down from a position as found) for placing it in a basket. For this change of orientation, only the clamping members need to be driven, and other components of the manipulator need not be activated, resulting in a high-speed, low energy operation.

In a second aspect of the present invention, a system for cleaning dirty crockery is provided, the system comprising: a carrier for supplying dirty crockery; a basket for receiving items of the dirty crockery; an electronic vision system for detecting gripping positions of items of crockery on the carrier; a manipulator coupled to the electronic vision system, the manipulator comprising a gripper unit for gripping each item of crockery at its detected gripping position, and for placing the gripped item of crockery in a predetermined position in the basket; and a washing machine for receiving the basket and washing the crockery. In an embodiment of the cleaning system, the carrier is a tray on which the dirty crockery is placed. The manipulator comprises: a robot arm having at least two degrees of freedom; a gripper unit provided at an end of the robot arm; and a controller for controlling an operation of the robot arm and the gripper unit. The gripper unit comprises at least one gripper member. The gripper member comprises: a gripper body; and a pair of fingers extending from the gripper body, the fingers being movable towards one another and away from one another, and each finger having an end carrying a clamping member for contacting the item of crockery. The gripper member is configured to be driven for rotating the clamping members around an axis parallel to a line connecting the ends of the fingers.

In the field of cleaning of items of crockery, such items each are a type of crockery, such as a type of dish, a type of saucer, a type of cup, a type of mug, a type of bowl, and/or a type of glass. Such items may have different shapes and dimensions, and edges thereof may have different shapes arid corresponding dimensions. For example, for a dish or a saucer, the edge is the outer peripheral edge of the dish or saucer. For a cup, a mug, a glass or a bowl, the edge is the upper edge delimiting an opening through which to put food or drink in the cup, mug, glass or bowl. Examples of edge shapes are: circular, oval, rectangular, polygonal, or other regular or irregular shapes. For specific sets of items of crockery, a common feature of these types of crockery is that they all may comprise a circular edge. For crockery comprising circular edges, the electronic vision system comprises: at least one camera, having a predetermined position, for taking an image of the item of crockery; a processor for analyzing the image taken by the camera; and a memory coupled to the processor. The memory is for storing dimensional data of different types of crockery, the dimensional data comprising diameters of circular edges of the different types of crockery. The processor is configured to: detect a circular or elliptical shape in the image; determine a diameter corresponding to the circular or elliptical shape in the image; and compare the diameter corresponding to the circular or elliptical shape in the image with the stored diameters of circular edges of the different types of crockery. If the diameter corresponding to the circular or elliptical shape in the image is substantially equal to a stored diameter of a circular edge of a particular type of crockery, then the processor identifies the circular or elliptical shape in the image as the circular edge of the particular type of crockery.

The electronic vision system is programmed to detect the circular edge of an item of crockery, where the diameter of the edge may determine which type of crockery is detected, in particular when care is taken to use only crockery having different circular edge diameters for different types of crockery. When an item of crockery is seen in an image from above, and is standing in a normal use position, circular edges of different types of crockery are seen in the image as perfect circles having a diameter determined by the type of crockery. When, however, an item of crockery is seen from a different position, and/or does not stand in a normal use position (e.g. because it has fallen over, or it is stacked on another item of crockery such that it is tilted), circular edges of different types of crockery may be seen in the image as ellipses having a short axis and a long axis. Here, the long axis is representative of the diameter of the circular edge of the item of crockery, so that also under these circumstances the type of the item of crockery may be identified.

When different items of crockery stacked one upon the other are presented to a camera of a vision system, underlying items of crockery may be at least partly or wholly invisible. Only when an overlying item of crockery has been removed, the underlying item of crockery may become fully or almost fully visible in an image taken by a particular camera.

In an embodiment of the cleaning system of the present invention, the processor of the electronic vision system is further configured to determine at least one position where the item of crockery is to be gripped on the basis of the circular or elliptical shape in the image, the image° taken from the item of crockery, and/or the dimensional data stored for the particular type of crockery. The or each gripping position of the item of crockery can be determined by the electronic vision system without great effort, having already identified the type of crockery and the position of the circular edge of the item of crockery.

In an embodiment of the electronic vision system, a first image of the item of crockery is taken from a first position in a first direction, and at least one second image of the item of crockery is taken from a second position (different from the first position) in a second direction (different from the first direction). Accordingly, the vision system may use stereo vision to determine a spatial position and orientation of items of crockery.

In an embodiment, the first position is above the item of crockery, and the first direction is downwards, the second position is at a side of the item of crockery, and the second direction is laterally.

In an embodiment, an item of crockery is illuminated by a light source from a side, and the camera takes an image at an opposite side of the item of crockery. Accordingly, the camera observes a contour of an item of crockery, or of a plurality of items of crockery, where contours of different items of crockery may overlap. Positioning the item of crockery between the light source and the camera provides relatively sharp, and therefore relatively easily detectable, contour lines with a high contrast. The camera is, as it were, in the shadow region of the item of crockery.

In an embodiment, an item of crockery is illuminated by at least three light sources, the light sources illuminating the item of crockery from different directions. With at least three light sources, an even illumination can be obtained, avoiding overlaying items of crockery to cast shadows on underlying items of crockery, which may make the process of detection of position and orientation of items of crockery more difficult.

The manipulator, having a controller receiving data from the vision system, grips items of crockery at gripping positions determined by the vision system, by clamping an item of crockery between the clamping members when moving the fingers towards each other.

In an embodiment, the manipulator comprises a first drive for rotating the gripper unit relative to the end of the robot arm around a first axis. The extension of the first axis may be chosen such that a rotation of the gripper unit effects a change of orientation of an item of crockery gripped by the gripper unit, e.g. to bring the item of crockery in an orientation suitable for discharging it in a corresponding basket. For dishes and saucers, such an orientation may be with the dish or saucer in a substantially upright position, with the plane of the dish or saucer extending substantially vertically or at a relatively small angle to the vertical direction. For cups, mugs, glasses or bowls, such an orientation may be with the opening of the cup, mug, glass or bowl facing substantially down. Also, with a rotation of the gripper unit, its clamping members may be better brought into position before gripping an item of crockery at its gripping positions.

In an embodiment, the gripper member is supported on a gripper base, and the gripper unit comprises a second drive for rotating the gripper member relative to the gripper base around a second axis, the second axis extending at an angle greater than 0° to the first axis. The rotation around the second axis provides a further degree of freedom in the process of gripping and orienting an item of crockery in a manipulation thereof. In an embodiment, the angle between the first axis and the second axis is between 30° and 60°, in particular about 45°.

In an embodiment, each of the clamping members, at a side facing the other clamping member, is provided with a slot. Such a slot may also be considered as an elongated recess, delimited by opposite ribs. The slot may have a cross-section which is adapted to a cross-section of a peripheral portion of a dish or saucer, such that the ribs of the clamping member grip over and under and edge part of the dish or saucer, thus providing a secure grip of the gripper member on the item of crockery.

When a cup, mug, glass or bowl is gripped, the clamping member will contact a cylindrically shaped part of such items of crockery. The shape of the side of the clamping members facing the item of crockery may be adapted to the curve of the item of crockery, or a mean curve of different items of crockery, to provide an optimum grip of the item of crockery. The clamping members may be manufactured from a deformable and elastic material such that the shape of the clamping members will adapt to the shape of the item of crockery to be gripped, and the contact area between the clamping members and the item of crockery becomes as high as possible. For gripping a cup, mug, glass or bowl, the clamping members may, or may not, be provided with a slot.

In an embodiment, the gripper member comprises a third drive for rotating the clamping members around a third axis parallel to a line connecting the ends of the fingers. With the provision of the third axis, a degree of freedom is provided for positioning the clamping members, e.g. for bringing the slot of the clamping members easily in line with the edge of a dish or saucer for gripping this item of crockery at their gripping positions.

In an embodiment, the gripper unit comprises a first gripper member and a second gripper member, the second axis of the first gripper member extending at an angle greater than zero to the second axis of the second gripper member. Using a first gripper member and a second gripper member will provide a more efficient handling of items of crockery compared with the situation where only one gripper member is available. With two gripper members, first two items of crockery can be gripped, then one movement to a basket location is made, and each item of crockery is discharged in a basket. Since the movement to the basket location takes a relatively long time, the embodiment with two gripper members will speed up the basket loading process considerably, thereby increasing the throughput of the cleaning system.

In an embodiment, the angle between the second axis of the first gripper member and the second axis of the second gripper member is greater than 60°, in particular greater than or equal to 90°, to avoid the manipulation of the item of crockery gripped by the first gripper member to interfere with the manipulation of the item of crockery gripped by the second gripper member.

In a further aspect of the present invention, an electronic vision system for detecting a position of an item of crockery is provided, in particular for use in the system according to the present invention. The electronic vision system comprises: at least one camera, having a predetermined position, for taking an image of the item of crockery; a processor for analyzing the image taken by the camera; and a memory coupled to the processor, the memory for storing dimensional data of different types of crockery, the dimensional data comprising dimensions and shapes of edges of the different types of crockery. The processor is configured to: detect a shape in the image; determine a dimension corresponding to the shape in the image; compare the dimension corresponding to the shape in the image with the stored dimensions of shapes of edges of the different types of crockery; and if the dimension corresponding to the shape in the image is substantially equal to a stored dimension of an edge of a particular type of crockery, then identifying the shape in the image as the edge of the particular type of crockery.

In a still further aspect of the invention, a manipulator for manipulating an item of crockery is provided, in particular for use in the system according to the present invention. The manipulator comprises: a robot arm having at least two degrees of freedom; a gripper unit provided at an end of the robot arm; and a controller for controlling an operation of the robot arm and the gripper unit, wherein the gripper unit comprises at least one gripper member. The gripper member comprises: a gripper body; and a pair of fingers extending from the gripper body, the fingers being movable towards one another and away from one another, and each finger having an end carrying a clamping member for contacting the item of crockery. The gripper member is configured to be driven for rotating the clamping members around an axis parallel to a line connecting the ends of the fingers.

These and other aspects of the invention will be more readily appreciated as the same becomes better understood by reference to the following detailed description and considered in connection with the accompanying drawings in which like reference symbols designate like parts.

### BRIEF DESCRIPTION OF THE DRAWINGS

Figure 1 depicts a perspective, partly schematic view of a system for cleaning dirty crockery.
Figure 2 depicts a perspective view of a basket for use in the system of Figure 1.
Figure 3 depicts a perspective view of the basket of Figure 2, filled with dishes.
Figure 4 depicts a perspective view of the basket of Figure 2, filled with bowls turned upside down.
Figure 5 depicts a perspective view of the basket of Figure 2, filled with cups provided with ears, and turned upside down.
Figure 6a depicts an elevated view of a tray having crockery stacked thereon.
Figure 6b illustrates an electronic vision system assessment of the position of the crockery on the tray of Figure 6a.
Figures 6c, 6d, 6e and 6f illustrate subsequent steps in removing items of crockery from the tray of Figure 6a.
Figures 7a and 7b depict perspective views, as viewed from different directions, and shown on different scales, of an embodiment of a gripper unit comprising two gripper members, for a manipulator according to the present invention.
Figure 8 depicts a perspective view of the gripper unit of Figure 7a or 7b, with one gripper member and associated drive omitted.
Figure 9 depicts a side view of a gripper member and part of the gripper unit of Figure 7a, 7b or 8, as viewed in the direction of arrow IX in Figures 7a, 7b and 8, and illustrating an embodiment of drive members for driving parts of the gripper member.
Figure 10 depicts a perspective view of an embodiment of a clamping member for cup-shaped or bowl-shaped articles.
Figure 11 depicts a front view of the clamping member of Figure 10, as viewed in the direction of arrow XI in Figure 10.
Figure 12 depicts a side view of the clamping member of Figure 10, as viewed in the direction of arrow XII in Figure 10.
Figure 13 illustrates a clamping of a bowl by clamping members of Figure 10 in a gripper member of Figures 8 or 9.
Figure 14 depicts a perspective view of an embodiment of a clamping member for dish-shaped or saucer-shaped articles.
Figure 15 depicts an elevated view of the clamping member of Figure 14.
Figure 16 illustrates a clamping of a dish (only shown partly) by a clamping member of Figure 14.

### DETAILED DESCRIPTION OF EMBODIMENTS

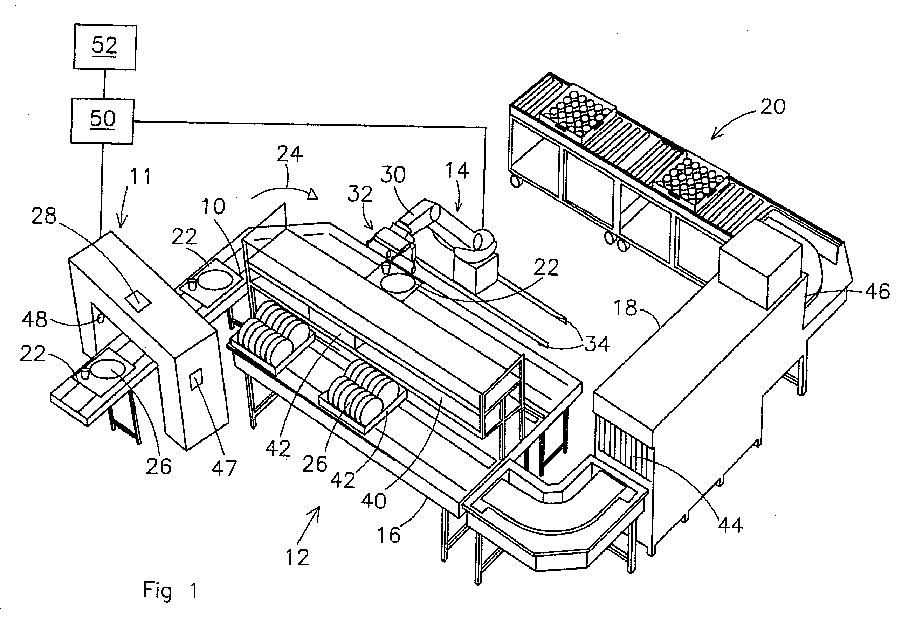

Figure 1 shows a system for cleaning dirty crockery, comprising a supply conveyor 10, a scanning station 11, a sorting station 12 with a manipulator 14, a discharge conveyor 16, a washing machine 18 and a crockery storage station 20. The system is to be placed in a kitchen or the like.

The supply conveyor 10 may be a belt type conveyor for moving trays 22, which have been placed on the supply conveyor 10 at a loading station (not shown) of a restaurant, canteen, etc., in a direction of arrow 24 to the sorting station 12. A tray 22 may have different items of dirty crockery 26 placed on it in a random fashion, left by a user of the particular tray 22 and crockery 26 after having consumed a meal. Any cutlery has been removed from the tray 22 beforehand. On the supply conveyor 10, each tray 22 passes the scanning station 11, where positions of the crockery 26 on the tray 22 are determined by an electronic vision system comprising at least one camera 28 taking an image of one or more items of crockery on the tray 22.

At the sorting station 12, the manipulator 14 comprises a robot arm 30 providing at least three degrees of freedom. At its free end, the robot arm 30 carries a gripper unit 32 to be explained in detail below. The manipulator 14 may be mounted on rails 34 on a floor of the kitchen to allow an adjustment of a working position thereof along the supply conveyor 10 in the sorting station 12.

The sorting station 12 comprises at least one shelf 40 on which one or more baskets 42 may be placed to be filled with dirty crockery 26 from the trays 22 by the manipulator 14. Also empty trays 22 may be stacked on a shelf 40.

At the side of the shelf 40 opposite to the side facing the manipulator 14, a basket 42 filled with dirty crockery 26 may be placed on discharge conveyor 16, either by hand or by a further manipulator (not shown) placed at the discharge conveyor 16 opposite the manipulator 14. A basket 42 may be filled with crockery 26 of the same type, or crockery of different type. The discharge conveyor 16 discharges the basket 42 to a supply side 44 of the washing machine 18, and through the washing machine 18 where the crockery 26 in the basket 42 is cleaned. At a discharge side 46 of the washing machine, the basket 42 with clean crockery 26 is conveyed further on the discharge conveyor 16 to the crockery storage station 20, where the crockery 26 may be taken from the basket 42 to be stored and/or used again, and the basket 42 may be replaced at the sorting station 12.

The system for cleaning dirty crockery as described above with reference to Figure 1 operates as follows.

At the scanning station 11, one or more cameras 28 having a predetermined position take at least one image of a tray 22 with dirty crockery 26 thereon, if required from different directions. The at least one camera 28 may be a stereo camera providing information on the distance between the camera and the objects scanned. In Figure 1, the camera 28 is shown as being positioned above the supply conveyor 10 for providing an elevated view of the tray 22 and the dirty crockery 26 thereon in a downwards direction, but it may also be located at another position at the scanning station 11. For example, a first image of the item of crockery 26 may be taken from above an item of crockery 26 in a downwards direction, and a second image may be taken from a side of the item of crockery 26 in a lateral direction. A light source 48 may illuminate an item of crockery 26 from a side, while a camera 47 takes an image at an opposite side of the item of crockery 26. In this way, a shadow image of the crockery 26 may be obtained, providing sharp contours suitable for further image processing. Since in some image processing applications sharp shadows are not preferred, in an embodiment the crockery 26 is illuminated in the scanning station 11 by at least three light sources which illuminate the crockery 26 from different directions.

During the scanning of the crockery 26 in the scanning station 11, the supply conveyor 10 (and, consequently, the crockery 26) may be momentarily stationary, or moving. Thus, the supply conveyor 10 may be driven continuously, possibly with varying speeds, or may be driven intermittently.

The scanning station 11 is part of an electronic vision system. In this electronic vision system, the scanning station 11, in particular the one or more cameras 28, 47 thereof, is coupled to a processor 50 for analyzing the image(s) taken by the camera(s) 28 to detect a position and orientation of the crockery 26 relative to the camera(s) 28. The electronic vision system further comprises a memory 52 for storing dimensional data of different types of crockery 26. Such dimensional data comprise diameters of circular edges of different types of crockery 26. The crockery 26 has been selected to have circular edges having different diameters for different items of crockery 26, so that each type of crockery 26 (e.g. plate, saucer, dish, cup, bowl) can be identified by a corresponding diameter.

From the position and orientation of each item of crockery 26 identified by the processor 50 of the electronic vision system by reference to its memory 52, the processor 50 may determine a gripping position to be used by the gripper unit 32 of the manipulator 14 for gripping the item of crockery 26 in the sorting station 12. Thus, the processor 50 of the electronic vision system provides control data to the manipulator 14 (as illustrated in Figure 1 by a dashed line) for gripping an item of crockery 26. Once the item of crockery 26 has been gripped by the gripper unit 32, it is manipulated by the manipulator 14 to be placed in a basket 42, which may be placed on a shelf 40.

During the gripping of the crockery 26 in the sorting station 12, the supply conveyor 10 (and, consequently, the crockery 26) may be momentarily stationary, or moving. Thus, for sorting, the supply conveyor 10 may be driven continuously, possibly with varying speeds, or may be driven intermittently.

It is to be noted that the scanning station 11 may be located upstream of the sorting station 12, as depicted in Figure 1, but the scanning station 11 may also be located at the sorting station 12 (configured such that is will not impede any actions to be taken in the sorting station 12) to take an image of crockery 26 there. In the scanning station 11 at this location, the crockery 26 may be stationary, whereafter the gripping of the crockery 26 in the sorting station 12 takes place with the crockery still being stationary, thus preventing any movement of crockery 26 between the moment of taking an image of the crockery 26 and the time of handling of the crockery 26. If necessary, new images can be taken after removal of each item of crockery 26.

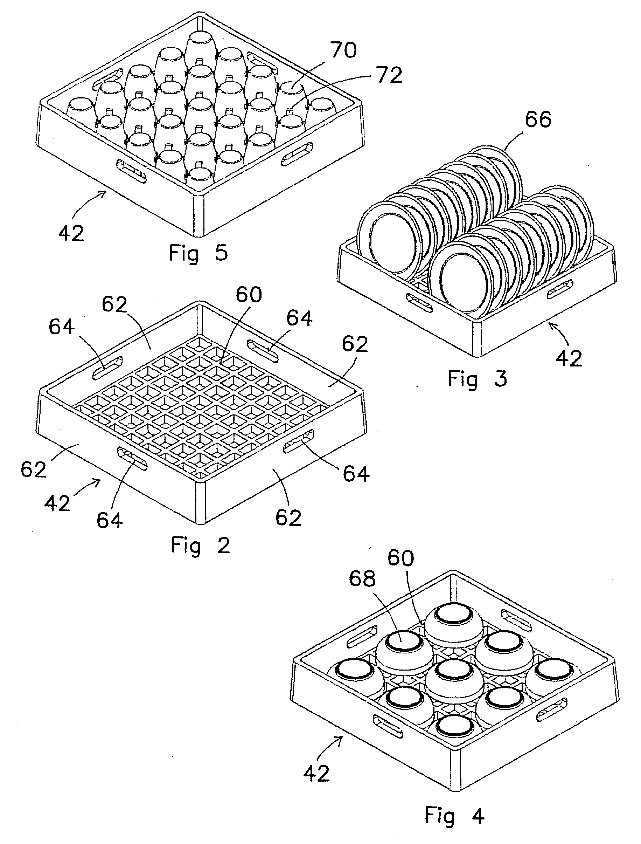

Figure 2 shows a detailed perspective view of a basket 42, having a perforated bottom 60 to allow a washing liquid (e.g. water mixed with a detergent) to be sprayed upwards through the bottom 60 to clean crockery placed in the basket 42, and to allow washing liquid to flow downwards through the bottom 60 for the washing liquid to leak from the crockery 26. Upstanding side walls 62 of the basket 42 are provided with elongate openings 64 to provide gripping positions for manual or machine (manipulator) handling of the basket 42.

Figure 3 illustrates a use of the basket 42 for stacking plates or dishes 66 (also shown in Figure 1 on the discharge conveyor 16). Here, the bottom 60 of the basket may be provided with upstanding projections (not shown) to support the dishes 66 in a tilted position thereof, and to separate the dishes from each other to allow the washing liquid to reach top and bottom surfaces of the dishes 66.

Figure 4 illustrates a use of the basket 42 for washing bowls 68 placed upside-down (bottom upwards) on the bottom 60 of the basket 42.

Figure 5 illustrates a use of the basket 42 for washing mugs 70 provided with ears 72. The mugs 70 are placed upside-down on the bottom 60 of the basket 42.

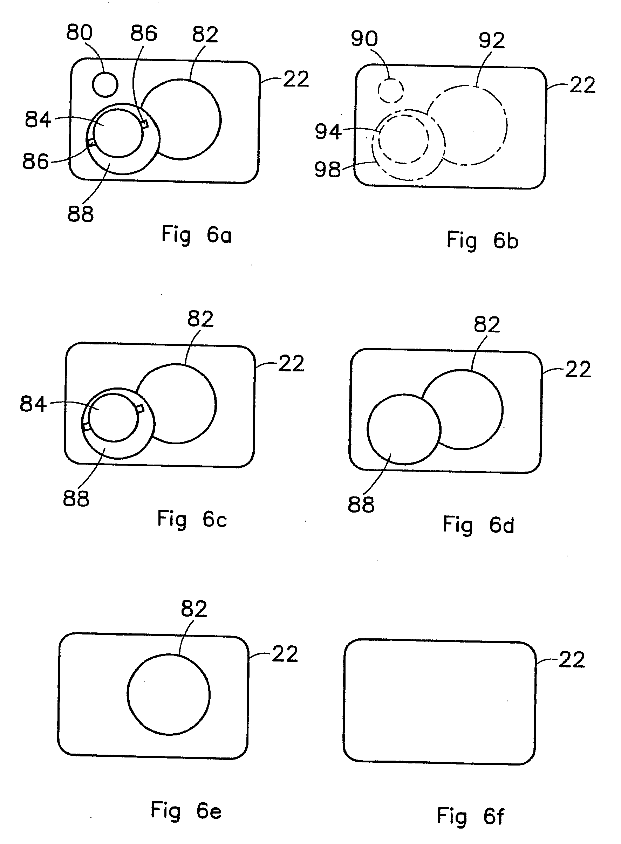

Figures 6a - 6f illustrates an operation of the electronic vision system.

Figure 6a illustrates an elevated view of a tray 22 with crockery 26 placed thereon in a random fashion, as it may be found on a tray 22 placed on the supply conveyor 10 in the scanning station 11, and in an image scanned by camera 28. The tray 22 carries a cup 80, a dish 82, and a bowl 84 provided with ears 86 on opposite sides, the bowl 84 being placed on a saucer 88.

As illustrated in Figure 6b, a processor 50 running appropriate software of an electronic vision system detects circular shapes in the image, each one having a position and a diameter. Circle 90 conforms to an upper edge of the cup 80. Circle 92 conforms to an outer edge of the dish 82. Circle 94 conforms to an upper edge of the bowl 84. Circle 98 conforms to an outer edge of the saucer 88. By comparing the diameter of each circle 90, 92, 94, 98 with diameters of circular edges of different types of crockery in memory 52, it may be determined whether a circle found in the image represents an upstanding upper edge, or a laterally extending outer edge. For example, the circle 90 may be found in the memory 52 to have a diameter to be associated with a cup 80. From this assessment, it may be concluded that the circle 90 represents an upper edge, not an outer edge. As another example, the circle 92 may be found in the memory 52 to have a diameter to be associated with a dish 82. From this assessment, it may be concluded that the circle 92 represents an outer edge, not an upper edge. For the gripper unit 32 of the manipulator 14 to perform its function properly, it is important that not only the positions and diameters of the circles 90, 92, 94 and 98 are known, but also the fact whether these circles represent upper edges or outer edges. This will become more clear as this description proceeds.

As illustrated in Figures 6c - 6f, the gripper unit 32 will remove items of crockery one by one, based on the position and diameter of the circles determined by the electronic vision system. As shown in Figure 6c, firstly the cup 80 has been removed. As shown in Figure 6d, secondly the bowl 84 has been removed. Since the position of the cup 80 and the bowl 84 do not interfere with each other, the order of their removal thereof may be reversed. Thirdly, as shown in Figure 6e, the saucer 88 has been removed. Fourthly, as shown in Figure 6f, the dish 82 has been removed. Removal of the saucer 88 may take place before removal of the dish 82 since the saucer 88 partly overlaps the dish 82. Removal of the bowl 84 takes place before removal of the saucer 88, since the bowl 84 stands on saucer 88.

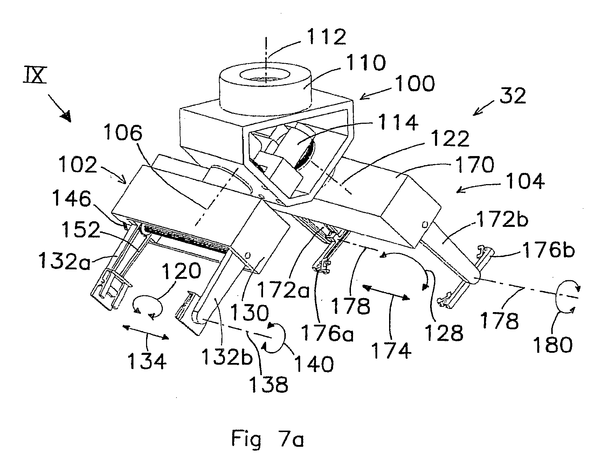

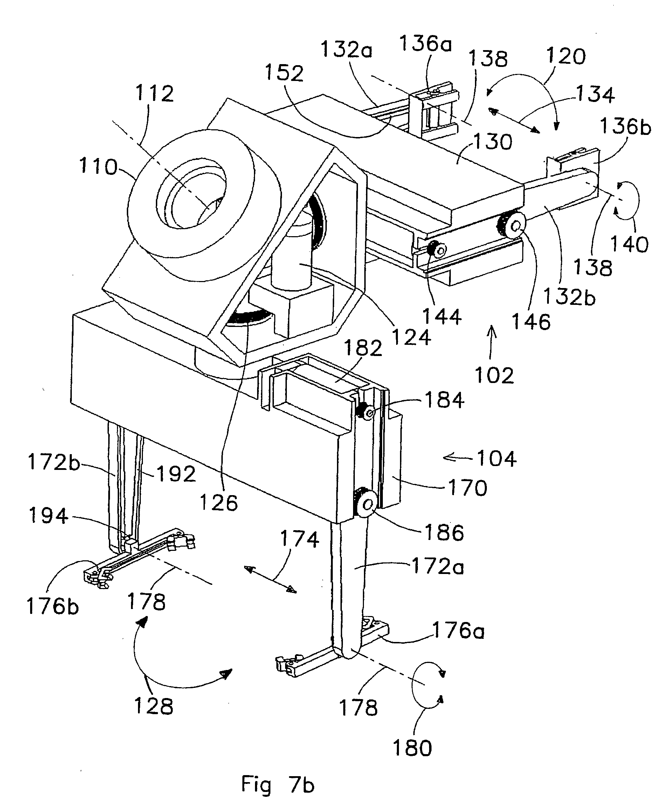

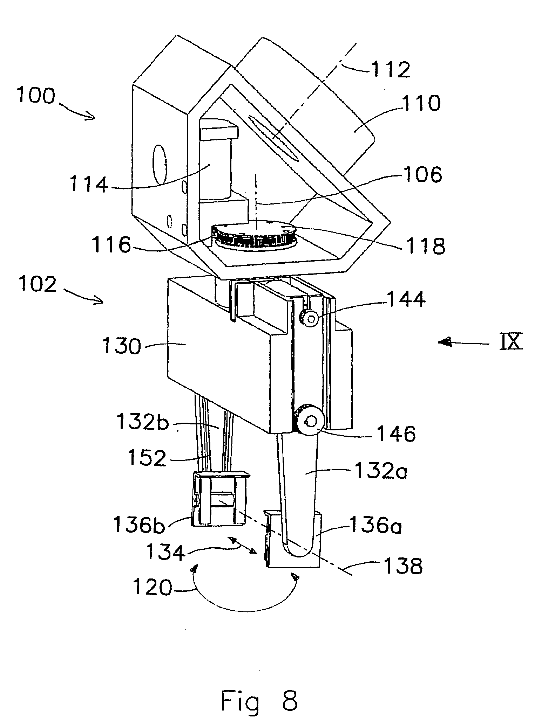

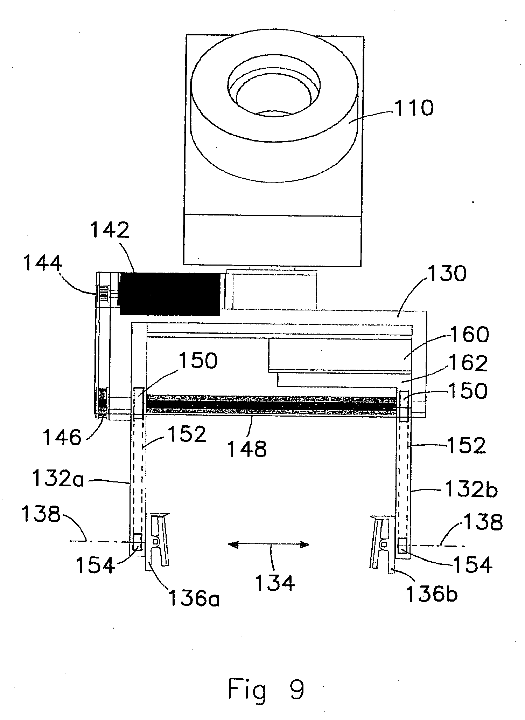

Figures 7a, 7b show a gripper unit 32, and Figures 8 and 9 show a part thereof, partly with covers removed for an improved understanding of its construction and operation.

The gripper unit 32 comprises a gripper base 100, a first gripper member 102 mounted on the gripper base 100, and a second gripper member 104 mounted on the gripper base 100.

The gripper base 100 comprises a coupling element 110, which may be ring-shaped, for coupling the gripper unit 32 to the robot arm 30. The robot arm coupling end may comprise a drive (not shown) for rotating the gripper unit relative to the end of the robot arm 30 around a first axis 112, where the coupling element 110 provides a non-rotatable coupling. Alternatively, the gripper base 100 or coupling element 110 may comprise a drive (not shown) for such rotation, where the robot arm coupling end provides a non-rotatable coupling.

The gripper base 100 comprises a hollow space for accommodating various drives, comprising drives for the first gripper member 102 and the second gripper member 104.

The first gripper member 102 is mounted rotatably around a second axis 106 on the gripper base 100. As illustrated in Figure 8, a drive motor 114 drives a small diameter gearwheel 116. The gearwheel 116 engages a large diameter gearwheel 118 coupled to the first gripper member 102. By appropriately energizing the drive motor 114, an angular position of the first gripper member 102 relative to the gripper base 100 can be set in one of the directions of double arrow 120. The gearing provided by gearwheels 116, 118 may be self-braking to maintain a set angular position after terminating the energizing thereof.

As illustrated in Figures 7a and 7b, the second gripper member 104 is mounted rotatably around a third axis 122 on the gripper base 100. A drive motor 124 drives a small diameter gearwheel (not visible), which engages a large diameter gearwheel 126 coupled to the second gripper member 104. By appropriately energizing the drive motor 124, an angular position of the second gripper member 104 relative to the gripper base 100 can be set in one of the directions of double arrow 128. The gearing comprising gearwheel 126 may be self-braking to maintain a set angular position after terminating the energizing thereof.

As illustrated, the first axis 112 extends at an angle greater than 0° to the second axis 106, and at an angle greater than 0° to the third axis 122, where the second axis 106 also extends at an angle greater than 0° (as shown, at 90°) to the third axis 122. This results in a certain amount of freedom to operate the first gripper member 102 independent from the second gripper member 104. In particular, one of the first and second gripper members 102, 104 may be operated fully (in particular, rotated fully around their respective second and third axis 106, 122), when the other one of the first and second gripper members 102, 104 is in a position as shown e.g. in Figure 7a, 7b.

The first gripper member 102 comprises a first gripper body 130 and two fingers 132a, 132b which are movable towards one another and away from one another, in the directions of double arrow 134. Each finger 132a, 132b has an end carrying a clamping member 136a, 136b, respectively. Each clamping member 136a, 136b is rotatably mounted on the corresponding finger 132a, 132b, respectively, around an axis 138 extending through the ends of both fingers 132a, 132b, for the clamping members 136a, 136b to be rotated synchronously in one of the directions indicated by double arrow 140.

As Figure 9 illustrates, the first gripper body 130 comprises a drive motor 142 driving a gearwheel 144 coupled by a toothed belt (not shown) to a gearwheel 146 on a toothed shaft 148 mounted rotatably in the first gripper body 130. Each finger 132a, 132b comprises a ring 150 mounted therein. Each ring 150 is toothed both internally and externally. At its inner diameter, each ring 150 is coupled with the shaft 148 to rotate together with shaft 148. Further, each ring 150 may slide along the shaft 148 when the corresponding finger 132a, 132b moves in one of the directions 134. Accordingly, when the shaft 148 is driven to rotate, the rings 150 rotate to the same extent, whatever the positions of the corresponding fingers 132a, 132b along the shaft 148 are. Each ring 150 is coupled by a toothed belt 152 to a respective gearwheel 154 coupled to a corresponding clamping member 136a, 136b. Thus, by driving gearwheel 144 with drive motor 142, an angular position of the clamping members 136a, 136b may be set.

The first gripper body 130 further comprises a linear electric drive motor comprising a stator 160 and translator 162 (linear rotor) for sliding finger 132b in the directions of arrows 134. A similar drive may be used to drive the finger 132a in a sliding movement.

Referring to Figure 7b, the second gripper member 104 comprises a second gripper body 170 and two fingers 172a, 172b which are movable towards one another and away from one another, in the directions of double arrow 174. Each finger 172a, 172b has an end carrying a clamping member 176a, 176b, respectively. Each clamping member 176a, 176b is rotatably mounted on the corresponding finger 172a, 172b, respectively, around an axis 178 extending through the ends of both fingers 172a, 172b, for the clamping members 176a, 176b to be rotated synchronously in one of the directions indicated by double arrow 180.

Similar to the drive construction for first gripper member 102 as explained by reference to Figure 9 above, the second gripper body 170 of the second gripper member 104 comprises a drive motor 182 driving a gearwheel 184 coupled by a toothed belt (not shown) to a gearwheel 186 on a toothed shaft mounted rotatably in the second gripper body 170. Each finger 172a, 172b comprises a ring mounted therein, which is toothed both internally and externally. At its inner diameter, each ring is coupled with the toothed shaft to rotate together with the toothed shaft. Further, each ring may slide along the toothed shaft when the corresponding finger 172a, 172b moves in one of the directions 174. Accordingly, when the toothed shaft is driven to rotate, the rings rotate to the same extent, whatever the positions of the corresponding fingers 172a, 172b along the toothed shaft are. Each ring is coupled by a toothed belt 192 to a respective gearwheel 194 coupled to a corresponding clamping member 176a, 176b. Thus, by driving gearwheel 184 with drive motor 182, an angular position of the clamping members 176a, 176b may be set.

The second gripper body 170 further comprises at least one linear electric drive motor each comprising a stator and a translator (linear rotor), for sliding at least one of the fingers 172a, 172b in the directions of arrows 174.

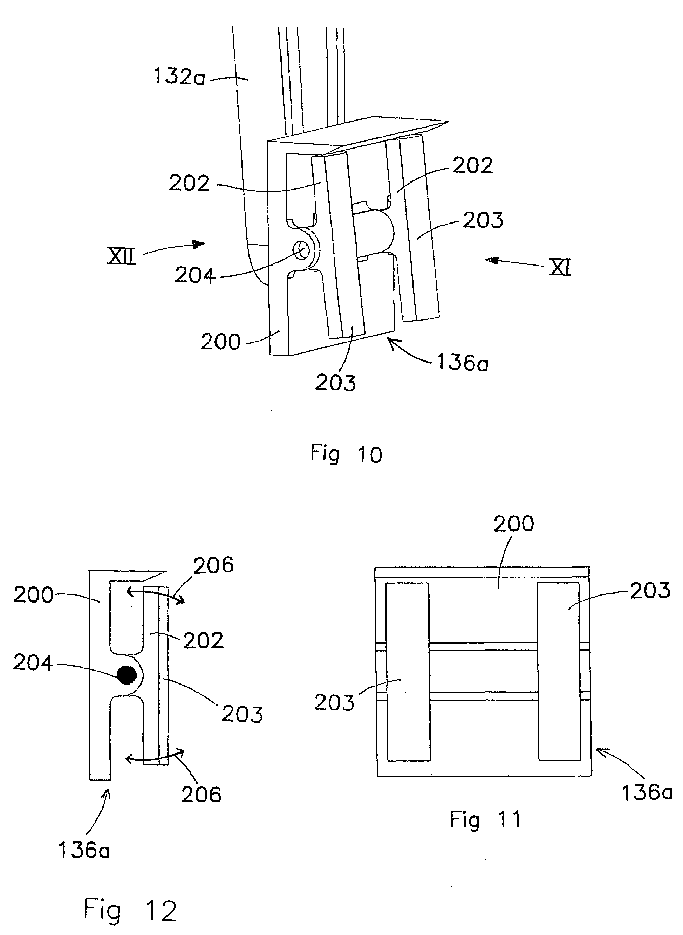

Figures 10, 11 and 12 show the clamping member 136a (similar to clamping member 136b) of the first gripper member 102 in greater detail. The clamping member 136a comprises support element 200 having an inverted L-shaped cross-section on which two lips 202 are mounted freely rotatable within a limited angular range around an axis 204 in the directions of double arrows 206. Each lip 202 is padded with a lining 203 of a deformable elastic material which can be used to provide sufficient friction on a surface of an object for the object not to slide relative to the lip 202. The lining 203 adapts its contact surface form to the surface of the object to provide an optimum contact surface area. The lining may be a thermoplastic elastomer, TPE.

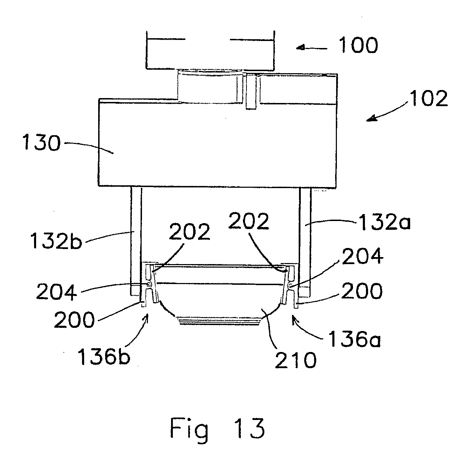

As illustrated by Figure 13, the clamping members 136a, 136b mounted on the fingers 132a, 132b, respectively, of the first gripper member 102 may clamp a bowl 210 between the lips 202 of the clamping members 136a, 136b. The angular position of the lips is determined by contact thereof with the upper edge of the bowl 210.

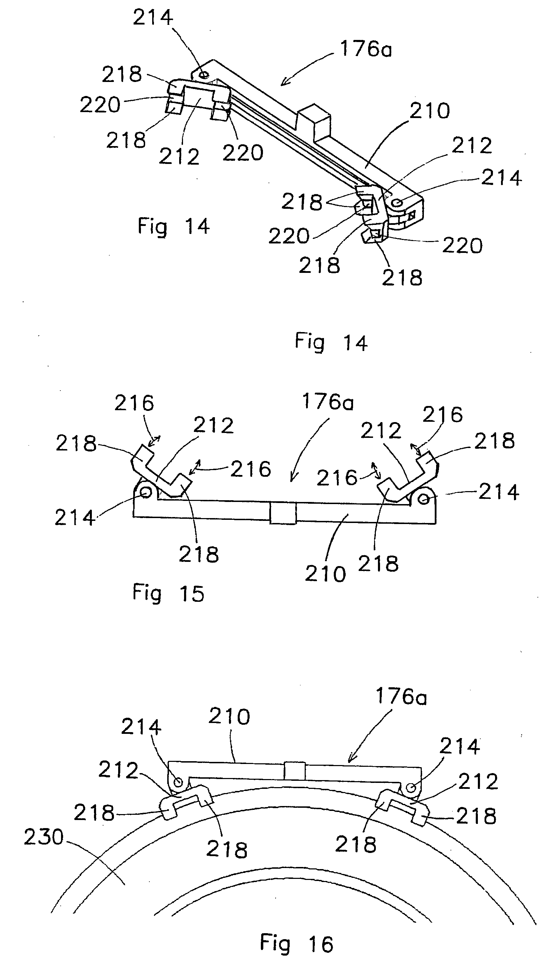

Figures 14, 15 and 16 show the clamping member 176a (similar to clamping member 176b) of the second gripper member 104 in greater detail. The clamping member 176a comprises elongate support element 210 on which two hands 212 are mounted freely rotatable within a limited angular range around an axis 214 in the directions of double arrows 216. Each hand 212 has two pairs of fingers 218. Between the fingers 218 of each pair a lining 220 of a deformable elastic material is provided which can be used to provide sufficient friction on a surface of an object for the object not to slide relative to the hand 212. The lining 220 adapts its contact surface form to the surface of the object to provide an optimum contact surface area. The lining may be a thermoplastic elastomer, TPE.

As illustrated by Figure 16, the clamping members 176a, 176b mounted on the fingers 172a, 172b, respectively, of the second gripper member 104 may clamp a dish 230 between the hands 212 of the clamping members 176a, 176b. The angular position of the hands 212 is determined by contact thereof with the outer edge of the dish 230.

With the embodiments of the gripper members 102, 104, it will be clear that the first gripper member 102 is used to grip types of crockery having an upper edge, like cups and bowls. The second gripper member 104 is used to grip types of crockery having an outer edge, like dishes, plates and saucers.

On the basis of a detected gripping position of a specific type of an item of crockery, the relevant gripper member 102, 104 is positioned relative to the item of crockery, the item of crockery is gripped, and the item of crockery is removed and manipulated by driving the different drive motors in the gripper unit 32 and the robot arm 30 appropriately. Each gripper member 102, 104 allows for turning an item of crockery upside down by rotating the clamping members 132a, 132b or 172a, 172b around axes 138 or 178, respectively. The gripper unit 32 may first load an item of crockery in one of the first gripper member 102 and the second gripper member 104 and then in the other one of the first gripper member 102 and the second gripper member 104, before moving the gripper unit to one or more baskets for unloading the gripper unit 32 there, which may increase throughput of the crockery manipulation.

As explained above, in a method and system of cleaning dirty crockery, dirty crockery is supplied on a carrier, which may be a tray on which the dirty crockery is placed. Gripping positions of supplied items of the dirty crockery are detected by an electronic vision system. An item of crockery is gripped by a gripper member of a manipulator. The gripper member has a gripper body, and a pair of fingers extending from the gripper body. Each finger has an end carrying a clamping member. The fingers are movable towards one another for gripping the item of crockery. The clamping members are rotated around an axis parallel to a line connecting the ends of the fingers for changing the orientation of the item of crockery. The gripped item of crockery is placed in a basket, which is fed into a washing machine. The electronic vision system comprises a camera for taking an image of the item of crockery, a processor for analyzing the image, and a memory for storing dimensions and shapes of edges of different types of crockery. The processor is configured to detect a shape in the image, determine a dimension corresponding to the shape in the image, and compare the dimension corresponding to the shape in the image with the stored dimensions of shapes of the different types of crockery. The type of crockery is a type of dish, a type of saucer, a type of cup, a type of mug, a type of bowl, and/or a type of glass. If the dimension corresponding to the shape in the image is substantially equal to a stored dimension of an edge of a particular type of crockery, then the shape in the image is identified as the edge of the particular type of crockery.

As required, detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. Further, the terms and phrases used herein are not intended to be limiting, but rather, to provide an understandable description of the invention.

The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language, not excluding other elements or steps). Any reference signs in the claims should not be construed as limiting the scope of the claims or the invention.

The mere fact that certain measures are recited in mutually different dependent claims does not indicate that a combination of these measures cannot be used to advantage.

The term coupled, as used herein, is defined as connected, although not necessarily directly, and not necessarily mechanically.

A single processor or other unit may fulfil the functions of several items recited in the claims.

## Claims

1. A method of cleaning dirty crockery (26), the method comprising:
supplying dirty crockery;
detecting gripping positions of items of the dirty crockery by an electronic vision system;
gripping an item of crockery at its detected gripping position by a gripper member (102, 104) of a manipulator (14), the gripper member (102, 104) comprising a gripper body (130, 170), and a pair of fingers (132a, 132b, 172a, 172b) extending from the gripper body (130, 170), each finger having an end carrying a clamping member (136a, 136b, 176a, 176b) for contacting the item of crockery, the fingers (132a, 132b, 172a, 172b) being moved towards one another for gripping the item of crockery;
rotating the clamping members (136a, 136b, 176a, 176b) around an axis parallel to a line connecting the ends of the fingers (132a, 132b, 172a, 172b) for changing the orientation of the item of crockery;
placing the gripped item of crockery in a predetermined position in a predetermined basket (42) by the manipulator (14);
feeding the basket (42) into a washing machine (18); and
washing the crockery by the washing machine (18),
wherein the electronic vision system is configured for:
taking an image of the item of crockery by at least one camera (28, 47) having a predetermined position;
analyzing the image by a processor (50); and
storing dimensional data of different types of crockery in a memory (52) coupled to the processor (50), the dimensional data comprising diameters of circular edges of the different types of crockery;
wherein the processor (50) is configured for:
detecting a circular or elliptical shape in the image;
determining a diameter corresponding to the circular or elliptical shape in the image;
comparing the diameter corresponding to the circular or elliptical shape in the image with the stored diameters of circular edges of the different types of crockery; and
if the diameter corresponding to the circular or elliptical shape in the image is substantially equal to a stored diameter of a circular edge of a particular type of crockery, then identifying the circular or elliptical shape in the image as the circular edge of the particular type of crockery.

2. The method according to claim 1, wherein the dirty crockery (26) is supplied on a carrier.

3. A system for cleaning dirty crockery (26), the system comprising:
a carrier for supplying dirty crockery;
a basket (42) for receiving items of the dirty crockery;
an electronic vision system for detecting gripping positions of items of crockery on the carrier;
a manipulator (14) coupled to the electronic vision system, the manipulator comprising a gripper unit for gripping each item of crockery at its detected gripping position, and for placing the gripped item of crockery in a predetermined position in the basket (42); and
a washing machine (18) for receiving the basket (42) and washing the crockery,
wherein the manipulator (14) comprises:
a robot arm having at least two degrees of freedom;
a gripper unit provided at an end of the robot arm; and
a controller for controlling an operation of the robot arm and the gripper unit,
wherein the gripper unit comprises at least one gripper member (102, 104), the gripper member (102, 104) comprising:
a gripper body (130, 170); and
a pair of fingers (132a, 132b, 172a, 172b) extending from the gripper body (130, 170), the fingers (132a, 132b, 172a, 172b) being movable towards one another and away from one another, and each finger having an end carrying a clamping member (136a, 136b, 176a, 176b) for contacting the item of crockery,
wherein the gripper member (102, 104) is configured to be driven for rotating the clamping members (136a, 136b, 176a, 176b) around a third axis parallel to a line connecting the ends of the fingers (132a, 132b, 172a, 172b),
wherein the electronic vision system comprises:
at least one camera (28, 47), having a predetermined position, for taking an image of the item of crockery;
a processor (50) for analyzing the image; and
a memory (52) coupled to the processor (50), the memory (52) for storing dimensional data of different types of crockery, the dimensional data comprising diameters of circular edges of the different types of crockery;
wherein the processor (50) is configured to:
detect a circular or elliptical shape in the image;
determine a diameter corresponding to the circular or elliptical shape in the image;
compare the diameter corresponding to the circular or elliptical shape in the image with the stored diameters of circular edges of the different types of crockery; and
if the diameter corresponding to the circular or elliptical shape in the image is substantially equal to a stored diameter of a circular edge of a particular type of crockery, then identifying the circular or elliptical shape in the image as the circular edge of the particular type of crockery.

4. The cleaning system according to claim 3, wherein the carrier is a tray (22) on which the dirty crockery (26) is placed.

5. The cleaning system according to claim 3, wherein the processor (50) is further configured to determine at least one position where the item of crockery (26) is to be gripped on the basis of the circular or elliptical shape in the image, the images taken from the item of crockery, and/or the dimensional data stored for the particular type of crockery.

6. The cleaning system according to any of claims 3-5, wherein the type of crockery (26) is a type of dish (82), a type of saucer, a type of cup (80), a type of saucer (88), a type of mug, a type of bowl (84), and/or a type of glass.

7. The cleaning system according to any of claims 3-6, wherein a first image of the item of crockery (26) is taken from a first position in a first direction, and at least one second image of the item of crockery is taken from a second position in a second direction.

8. The cleaning system according to claim 7, wherein the first position is above the item of crockery (26), and the first direction is downwards, and wherein the second position is at a side of the item of crockery, and the second direction is laterally.

9. The cleaning system according to any of claims 3-8, wherein an item of crockery (26) is illuminated by a light source (48) from a side, and the camera (47) takes an image at an opposite side of the item of crockery.

10. The cleaning system according to claim 3, wherein an item of crockery (26) is illuminated by at least three light sources, the light sources illuminating the item of crockery from different directions.

11. The cleaning system according to any of claims 3-10, wherein the manipulator (14) comprises a first drive for rotating the gripper unit (32) relative to the end of the robot arm (30) around a first axis (112).

12. The cleaning system according to claim 11, wherein gripper member (102, 104) is supported on a gripper base (100), and wherein the gripper unit (32) comprises a second drive (114, 124) for rotating the gripper member (102, 104) relative to the gripper base (100) around a second axis (106).

13. The cleaning system according to claim 12, wherein the second axis (106) extends at an angle greater than 0° to the first axis (112), wherein the angle in particular is between 30° and 60°, more in particular about 45°.

14. The cleaning system according to any of claims 3-13, wherein each of the clamping members (176a, 176b), at a side facing the other clamping member (176a, 176b), is provided with a slot.

15. The cleaning system according to claim 12, wherein the gripper unit (32) comprises a first gripper member (102) and a second gripper member (104), the second axis (106) of the first gripper member (102) extending at an angle greater than 0° to the second axis of the second gripper member (104), wherein the angle in particular is greater than 60°, more in particular greater than or equal to 90°.

## Patentansprüche

1. Verfahren zum Reinigen schmutzigen Geschirrs (26), wobei das Verfahren umfasst:
Zuführen schmutzigen Geschirrs;
Erfassen von Greifpositionen von Gegenständen des schmutzigen Geschirrs durch ein elektronisches Sichtsystem;
Greifen eines Geschirrgegenstandes an seiner erfassten Greifposition durch ein Greifelement (102, 104) eines Manipulators (14), wobei das Greifelement (102, 104) einen Greifkörper (130, 170) und ein paar Finger (132a, 132b, 172a, 172b) umfasst, die sich von dem Greifkörper (130, 170) erstrecken, wobei jeder Finger ein Ende hat, welches ein Klemmelement (136a, 136b, 176a, 176b) zum Berühren des Geschirrgegenstandes trägt, wobei die Finger (132a, 132b, 172a, 172b) zum Greifen des Geschirrgegenstandes zueinander hin bewegt werden;
Drehen der Klemmelemente (136a, 136b, 176a, 176b) um eine Achse parallel zu einer Linie, welche die Enden der Finger (132a, 132b, 172a, 172b) verbindet, um die Ausrichtung des Geschirrgegenstandes zu verändern;
Anordnen des gegriffenen Geschirrgegenstandes durch den Manipulator (14) in einer vorbestimmten Position in einem vorbestimmten Korb (42); Zuführen des Korbes (42) in eine Spülmaschine (18); und Spülen des Geschirrs durch die Spülmaschine (18),
wobei das elektronische Sichtsystem konfiguriert ist zum:
Aufnehmen eines Bildes des Geschirrgegenstandes durch wenigstens eine Kamera (28, 47), die eine vorbestimmte Position hat;
Analysieren des Bildes durch einen Prozessors (50); und
Speichern von Dimensionsdaten unterschiedlicher Typen von Geschirr in einem Speicher (52), der mit dem Prozessor (50) gekoppelt ist, wobei die Dimensionsdaten Durchmesser von runden Kanten der unterschiedlichen Typen von Geschirr umfassen;
wobei der Prozessor (50) konfiguriert ist zum:
Erfassen einer runden oder elliptischen Form in dem Bild;
Bestimmen eines Durchmessers, der mit der runden oder elliptischen Form in dem Bild korrespondiert;
Vergleichen des mit der runden oder elliptischen Form in dem Bild korrespondierenden Durchmessers mit den gespeicherten Durchmessern runder Kanten unterschiedlicher Typen von Geschirr; und
falls der mit der runden oder elliptischen Form in dem Bild korrespondierende Durchmesser im Wesentlichen gleich einem gespeicherten Durchmesser einer runden Kante eines speziellen Typs von Geschirr ist, dann Identifizieren der runden oder elliptischen Form in dem Bild als die runde Kante des speziellen Typs von Geschirr.

2. Verfahren nach Anspruch 1, in welchem das schmutzige Geschirr (26) auf einem Träger bereitgestellt wird.

3. System zum Reinigen des schmutzigen Geschirrs (26), wobei das System umfasst:
einen Träger zum Bereitstellen des schmutzigen Geschirrs;
einen Korb (42) zum Aufnehmen von Gegenständen des schmutzigen Geschirrs;
ein elektronisches Sichtsystem zum Erfassen von Greifpositionen von Geschirrgegenständen auf dem Träger;
einen Manipulator (14), der mit dem elektronischen Sichtsystem gekoppelt ist, wobei der Manipulator eine Greifeinheit zum Greifen jedes Geschirrgegenstandes an seiner erfassten Greifposition und zum Anordnen des gegriffenen Geschirrgegenstandes in einer vorbestimmten Position in dem Korb (42) umfasst; und
eine Spülmaschine (80) zum Aufnehmen des Korbes (42) und Spülen des Geschirrs, wobei der Manipulator (40) umfasst:
einen Roboterarm mit wenigstens zwei Freiheitsgraden;
eine Greifeinheit, die an einem Ende des Roboterarms vorgesehen ist; und
eine Steuereinrichtung zum Steuern einer Tätigkeit des Roboterarms und der Greifeinheit, wobei die Greifeinheit wenigstens ein Greifelement (102, 104) umfasst, wobei das Greifelement (102, 104) umfasst:
einen Greifkörper (130, 170); und
ein paar Finger (132a, 132b, 172a, 172b), die sich von dem Greifkörper (130, 170) erstrecken, wobei die Finger (132a, 132b, 172a, 172b) zueinander hin und voneinander weg bewegbar sind und jeder Finger ein Ende aufweist, das ein Klemmelement (136a, 136b, 176a, 176b) zum Berühren des Geschirrgegenstandes trägt,
wobei das Greifelement (102, 104) so konfiguriert ist, dass dieses zum Drehen der Klemmelemente (136a, 136b, 176a, 176b) um eine dritte Achse parallel zu einer die Enden der Finger (132a, 132b, 172a, 172b) verbindenden Linie angetrieben wird,
wobei das elektronische Sichtsystem umfasst:
wenigstens eine Kamera (28, 47) mit einer vorbestimmten Position zum Aufnehmen eines Bildes des Geschirrgegenstandes;
einen Prozessor (50) zum Analysieren des Bildes; und
einen Speicher (52) der mit dem Prozessor (50) gekoppelt ist, wobei der Speicher (52) Dimensionsdaten unterschiedlicher Typen von Geschirr speichert, wobei die Dimensionsdaten Durchmesser runder Kanten unterschiedlicher Typen von Geschirr umfassen;
wobei der Prozessor (50) so konfiguriert ist: um
eine runde oder elliptische Form in dem Bild zu erfassen;
einen Durchmesser zu bestimmen, der mit der runden oder elliptischen Form in dem Bild korrespondiert;
den mit der runden oder elliptischen Form in dem Bild korrespondierenden Durchmesser mit den gespeicherten Durchmessern runder Kanten unterschiedlicher Typen von Geschirr zu vergleichen; und
falls der mit der runden oder elliptischen Form in dem Bild korrespondierende Durchmesser im Wesentlichen gleich einem gespeicherten Durchmesser einer runden Kante eines speziellen Typs von Geschirr gleich ist, dann die runde oder elliptische Form in dem Bild als die runde Kante des speziellen Typs von Geschirr identifizieren.

4. Reinigungssystem nach Anspruch 3, in welchem der Träger eine Ablage (22) ist, auf welcher das schmutzige Geschirr (26) angeordnet ist.

5. Reinigungssystem nach Anspruch 3, in welchem der Prozessor (50) ferner so konfiguriert ist, dass dieser auf der Basis der runden oder elliptischen Form in dem Bild, den von dem Geschirrgegenstand aufgenommenen Bildern und/oder den für den speziellen Typ von Geschirr gespeicherten Dimensionsdaten wenigstens eine Position bestimmt, an welcher der Geschirrgegenstand (26) gegriffen werden soll.

6. Reinigungssystem nach einem der Ansprüche 3 bis 5, in welchem der Typ von Geschirr (26) eine Art von Teller (82), eine Art von Untertasse, eine Art von Tasse (80), eine Art von Untertasse (88), eine Art von Becher, eine Art von Schale (84) und/oder eine Art von Glas ist.

7. Reinigungssystem nach einem der Ansprüche 3 bis 6, in welcher ein erstes Bild des Geschirrgegenstandes (26) aus einer ersten Position in einer ersten Richtung aufgenommen wird und wenigstens ein zweites Bild des Geschirrgegenstandes (26) aus einer zweiten Position in einer zweiten Richtung aufgenommen wird.

8. Reinigungssystem nach Anspruch 7, in welchem sich die erste Position oberhalb des Geschirrgegenstandes (26) befindet und die erste Richtung nach unten gerichtet ist, und in welchem sich die zweite Position an einer Seite des Geschirrgegenstandes befindet und die zweite Richtung seitlich ist.

9. Reinigungssystem nach einem der Ansprüche 3 bis 8, in welchem ein Geschirrgegenstand (26) durch eine Lichtquelle (48) von einer Seite aus beleuchtet wird und die Kamera (47) ein Bild an einer entgegengesetzten Seite des Geschirrgegenstandes aufnimmt.

10. Reinigungssystem nach Anspruch 3, in welchem ein Geschirrgegenstand (26) durch wenigstens drei Lichtquellen beleuchtet wird, wobei die Lichtquellen den Geschirrgegenstand aus unterschiedlichen Richtungen beleuchten.

11. Reinigungssystem nach einem der Ansprüche 3 bis 10, in welchem der Manipulator (14) einen ersten Antrieb zum Drehen der Greifeinheit (32) um eine erste Achse (112) relativ zum Ende des Roboterarms (30) umfasst.

12. Reinigungssystem nach Anspruch 11, in welchem das Greifelement (102, 104) auf einer Greiferbasis (100) abgestützt ist, und in welchem die Greifeinheit (132) einen zweiten Antrieb (114, 124) zum Drehen des Greifelements (102, 104) um eine zweite Achse (106) relativ zur Greiferbasis (100) umfasst.

13. Reinigungssystem nach Anspruch 12, in welchem sich die zweite Achse (106) in einem Winkel größer als 0° zur ersten Achse (112) erstreckt, wobei der Winkel insbesondere zwischen 30° und 60°, ganz bevorzugt etwa 45° beträgt.

14. Reinigungssystem nach einem der Ansprüche 3 bis 13, in welchem jedes der Klemmelemente (176a, 176b) an einer dem anderen Klemmelement (176a, 176b) zugewandten Seite mit einem Schlitz versehen ist.

15. Reinigungssystem nach Anspruch 12, in welchem die Greifeinheit (132) ein erstes Greifelement (102) und ein zweites Greifelement (104) umfasst, wobei sich die zweite Achse (106) des ersten Greifelements (102) in einem Winkel größer als 0° zur zweiten Achse des zweiten Greifelements (104) erstreckt, wobei der Winkel insbesondere größer ist als 60°, ganz bevorzugt größer als oder gleich 90° ist.

## Revendications

1. Procédé de nettoyage de vaisselle sale (26), le procédé consistant à :
fournir de la vaisselle sale ;
détecter des positions de saisie d'articles de la vaisselle sale au moyen d'un système de vision électronique ;
saisir un article de vaisselle au niveau de sa position de saisie détectée au moyen d'un élément préhenseur (102, 104) d'un manipulateur (14), l'élément préhenseur (102, 104) comprenant un corps de préhenseur (130, 170) et deux doigts (132a, 132b, 172a, 172b) s'étendant du corps de préhenseur (130, 170), chaque doigt comportant une extrémité portant un élément de serrage (136a, 136b, 176a, 176b) destiné à contacter l'article de vaisselle, les doigts (132a, 132b, 172a, 172b) se déplaçant l'un vers l'autre pour saisir l'article de vaisselle ;
faire tourner les éléments de serrage (136a, 136b, 176a, 176b) autour d'un axe parallèle à une ligne reliant les extrémités des doigts (132a, 132b, 172a, 172b) pour modifier l'orientation de l'article de vaisselle ;
placer l'article de vaisselle saisi dans une position prédéterminée dans un panier prédéterminé (42) au moyen du manipulateur (14) ;
amener le panier (42) dans une machine à laver (18) ; et
laver la vaisselle au moyen de la machine à laver (18),
dans lequel le système de vision électronique est configuré pour :
prendre une image de l'article de vaisselle au moyen d'au moins un appareil de prise de vue (28, 47) ayant une position prédéterminée ;
analyser l'image au moyen d'un processeur (50) ; et
mémoriser des données dimensionnelles de différents types de vaisselle dans une mémoire (52) couplée au processeur (50), les données dimensionnelles comprenant des diamètres de contours circulaires de différents types de vaisselle ;
dans lequel le processeur (50) est configuré pour :
détecter une forme circulaire ou elliptique dans l'image ;
déterminer un diamètre correspondant à la forme circulaire ou elliptique détectée dans l'image ;
comparer le diamètre correspondant à la forme circulaire ou elliptique détectée dans l'image avec les diamètres mémorisés de contours circulaires des différents types de vaisselle ; et
si le diamètre correspondant à la forme circulaire ou elliptique détectée dans l'image est sensiblement égal à un diamètre mémorisé d'un contour circulaire d'un type particulier de vaisselle, identifier alors la forme circulaire ou elliptique détectée dans l'image en tant que contour circulaire du type particulier de vaisselle.

2. Procédé selon la revendication 1, dans lequel la vaisselle sale (26) est placée sur un support.

3. Système de nettoyage de vaisselle sale (26), le système comprenant :
un support destiné à alimenter en vaisselle sale ;
un panier (42) destiné à recevoir des articles de la vaisselle sale ;
un système de vision électronique destiné à détecter des positions de saisie d'articles de vaisselle sur le support ;
un manipulateur (14) couplé au système de vision électronique, le manipulateur comprenant une unité préhenseur destinée à saisir chaque article de vaisselle au niveau de sa position de saisie détectée, et à placer l'article de vaisselle saisi dans une position prédéterminée dans le panier (42) ; et
une machine à laver (18) destinée à recevoir le panier (42) et à laver la vaisselle,
dans lequel le manipulateur (14) comprend :
un bras de robot ayant au moins deux degrés de liberté ;
une unité préhenseur disposée à une extrémité du bras de robot ; et
un dispositif de commande destiné à commander une mise en oeuvre du bras de robot et de l'unité préhenseur,
dans lequel l'unité préhenseur comprend au moins un élément préhenseur (102, 104), l'élément préhenseur (102, 104) comprenant :
un corps de préhenseur (130, 170) ; et
deux doigts (132a, 132b, 172a, 172b) s'étendant du corps de préhenseur (130, 170), les doigts (132a, 132b, 172a, 172b) pouvant être approchés et écartés l'un de l'autre, et chaque doigt comportant une extrémité portant un élément de serrage (136a, 136b, 176a, 176b) destiné à contacter l'article de vaisselle,
dans lequel l'élément préhenseur (102, 104) est conçu pour être entraîné de façon à faire tourner les éléments de serrage (136a, 136b, 176a, 176b) autour d'un troisième axe parallèle à une ligne reliant les extrémités des doigts (132a, 132b, 172a, 172b),
dans lequel le système de vision électronique comprend :
au moins un appareil de prise de vue (28, 47), ayant une position prédéterminée, destiné à prendre une image de l'article de vaisselle ;
un processeur (50) destiné à analyser l'image ; et
une mémoire (52) couplée au processeur (50), la mémoire (52) étant destinée à mémoriser des données dimensionnelles de différents types de vaisselle, les données dimensionnelles comprenant des diamètres de contours circulaires de différents types de vaisselle ;
dans lequel le processeur (50) est configuré pour :
détecter une forme circulaire ou elliptique dans l'image ;
déterminer un diamètre correspondant à la forme circulaire ou elliptique dans l'image ;
comparer le diamètre correspondant à la forme circulaire ou elliptique dans l'image avec les diamètres mémorisés de contours circulaires de différents types de vaisselle ; et
si le diamètre correspondant à la forme circulaire ou elliptique dans l'image est sensiblement égal à un diamètre mémorisé d'un contour circulaire d'un type particulier de vaisselle, identifier alors la forme circulaire ou elliptique dans l'image en tant que contour circulaire du type particulier de vaisselle.

4. Système de nettoyage selon la revendication 3, dans lequel le support est un plateau (22) sur lequel est placée la vaisselle sale (26).

5. Système de nettoyage selon la revendication 3, dans lequel le processeur (50) est en outre configuré pour déterminer au moins une position à laquelle il faut saisir l'article de vaisselle (26) sur la base de la forme circulaire ou elliptique dans l'image, des images prises de l'article de vaisselle et/ou des données dimensionnelles mémorisées pour le type particulier de vaisselle.

6. Système de nettoyage selon l'une quelconque des revendications 3 à 5, dans lequel le type de vaisselle (26) est un type d'assiette (82), un type de soucoupe, un type de tasse (81), un type de soucoupe (88), un type de gobelet, un type de bol (84) et/ou un type de verre.

7. Système de nettoyage selon l'une quelconque des revendications 3 à 6, dans lequel une première image de l'article de vaisselle (26) est prise depuis une première position dans une première direction orientée, et au moins une seconde image de l'article de vaisselle est prise depuis une seconde position dans une seconde direction orientée.

8. Système de nettoyage selon la revendication 7, dans lequel la première position est située au-dessus de l'article de vaisselle (26), et la première direction orientée est orientée vers le bas, et dans lequel la seconde position est située au niveau d'un côté de l'article de vaisselle, et la seconde direction orientée est orientée latéralement.

9. Système de nettoyage selon l'une quelconque des revendications 3 à 8, dans lequel un article de vaisselle (26) est éclairé par une source de lumière (48) depuis un côté, et l'appareil de prise de vue (47) prend une image au niveau d'un côté opposé de l'article de vaisselle.

10. Système de nettoyage selon la revendication 3, dans lequel un article de vaisselle (26) est éclairé par au moins trois sources de lumière, les sources de lumière éclairant l'article de vaisselle depuis différentes directions.

11. Système de nettoyage selon l'une quelconque des revendications 3 à 10, dans lequel le manipulateur (14) comprend un premier dispositif d'entraînement destiné à faire tourner l'unité préhenseur (32) par rapport à l'extrémité du bras de robot (30) autour d'un premier axe (112).

12. Système de nettoyage selon la revendication 11, dans lequel l'élément préhenseur (102, 104) est supporté sur une base de préhenseur (100), et dans lequel l'unité préhenseur (32) comprend un second dispositif d'entraînement (114, 124) destiné à faire tourner l'élément préhenseur (102, 104) par rapport à la base de préhenseur (100) autour d'un deuxième axe (106).

13. Système de nettoyage selon la revendication 12, dans lequel le deuxième axe (106) s'étend à un angle supérieur à 0° par rapport au premier axe (112), dans lequel l'angle est particulièrement compris entre 30° et 60°, l'angle étant plus particulièrement d'environ 45 degrés.

14. Système de nettoyage selon l'une quelconque des revendications 3 à 13, dans lequel chacun des éléments de serrage (176a, 176b), d'un côté faisant face à l'autre élément de serrage (176a, 176b), est pourvu d'une fente.

15. Système de nettoyage selon la revendication 12, dans lequel l'unité préhenseur (32) comprend un premier élément préhenseur (102) et un second élément préhenseur (104), le deuxième axe (106) du premier élément préhenseur (102) s'étendant à un angle supérieur à 0° par rapport au deuxième axe du second élément préhenseur (104), l'angle étant en particulier supérieur à 60°, plus particulièrement supérieur ou égal à 90°.
